# EUROPÄISCHE PATENTSCHRIFT

(11) **EP 0 585 689 B1**
(45) Veröffentlichungstag und Bekanntmachung des Hinweises auf die Patenterteilung: **12.03.1997**
(21) Anmeldenummer: 93112979.5
(22) Anmeldetag: 13.08.1993
(51) Int. Cl.: B01D 17/022

(54) **Koaleszens-Abscheider**
Coalescence separator
Séparateur à coalescence

(30) Priorität: 04.09.1992 DE 4229653; 16.01.1993 DE 4301086
(43) Veröffentlichungstag der Anmeldung: 09.03.1994
(73) Patentinhaber: FILTERWERK MANN & HUMMEL GMBH, D-71631 Ludwigsburg (DE)
(72) Erfinder: Erdmannsdörfer, Hans, D-71636 Ludwigsburg (DE); Kappus, Gerd, D-67346 Speyer (DE); Kolitz, Eberhard, D-74321 Bietigheim.Bissingen (DE)
(74) Vertreter: Voth, Gerhard, Dipl.-Ing.

(56) Entgegenhaltungen:
- EP-A- 0 319 713
- DE-A- 2 652 632
- DE-A- 2 800 344
- US-A- 4 650 581

## Beschreibung

Die Erfindung betrifft einen Koaleszenz-Abscheider nach dem Oberbegriff des Anspruchs 1.

Bei der Verdichtung von Luft mit ölgeschmierten Schraubenkompressoren gelangt zwangsläufig auch ein Teil des Schmieröls in die verdichtete Luft. Es ist deshalb erforderlich, einen Ölabscheider anzuordnen, der in der Lage ist, einen großen Teil des Ölgehalts aus der Luft herauszufiltern. Beim Abkühlen der verdichteten Luft fällt jedoch nochmals ein Teil Kondensatflüssigkeit an, die zum großen Teil aus Wasser, verursacht durch den Feuchtigkeitsgehalt der Luft, besteht, wobei dieses Wasser ein Teil Öl mitführt. Das in dem Kondensat enthaltene Öl ist in dem Wasser sehr fein dispergiert oder zum Teil emulgiert.

Es hat sich gezeigt, daß eine Beruhigung dieses Kondensats in entsprechenden Behältern nicht dazu führt, daß sich das gesamte Öl an der Oberfläche absetzt und dort abgeschieden werden kann. Eine Aufbereitung dieses Luftverdichterkondensats ist daher unumgänglich, da dieses meist einen Restölgehalt von 30 mg bis 200 mg pro Liter aufweist.

Aus der EP-A-319 713 (A2) ist ein Koaleszenz-Abscheider der genannten Art bekannt. Dieser weist einen Flüssigkeitsbehälter mit einem Einlauf und einem Ablauf auf, wobei Einlauf und Ablauf und der Flüssigkeitsspiegel im Flüssigkeitsbehälter sich in etwa gleicher Höhe befinden. Unterhalb von Einlauf und Ablauf ist ein koalierend wirkendes Filter angeordnet. Während des Betriebs des Koaleszenz-Abscheiders bildet sich oberhalb des Filters eine Leichtflüssigkeitsschicht, die von Zeit zu Zeit abgeführt werden muß.

Ein Nachteil dieses Koaleszenz-Abscheiders ist darin zu sehen, daß ein kontinuierlicher Betrieb aufgrund der erforderlichen Reinigungsintervalle nicht möglich ist. Außerdem wird durch die Anordnung von Einlauf und Ablauf im oberen Bereich des Abscheiders eine sehr starke Verwirbelung der zugeführten Flüssigkeit verursacht, die dazu führt, daß die abgeschiedene Leichtflüssigkeit bzw. das Öl sich evtl. wieder mit dem Wasser vermischt und eine optimale Trennung von Wasser und Öl nicht mehr möglich ist.

Es ist ferner aus der Broschüre "Övamat - der saubere und sichere Öl-Wasser-Trenner für Kondensat" der Firma Beko Kondensattechnik ein System zum Trennen des Öls bekannt, bei dem mittels eines Aktivkohlefilters die dispergierten bzw. schwach emulgierten Ölbestandteile adsorbiert werden sollen.

Ein Nachteil dieses Systems besteht darin, daß die Standzeit der Aktivkohle zum einen stark vom Dispergierungs- bzw. Emulgierungsgrad des Öles im Wasser abhängt und damit das Filter öfters ausgewechselt werden muß. Außerdem besteht durch die Anordnung des Wasserauslaufes im Bereich des Ölauslaufes die Gefahr, daß bei fehlerhafter Bedienung Öl in den Wasserauslauf gelangt und damit die Wirkung der Anlage wesentlich beeinträchtigt.

Es ist ferner bekannt, daß Aktivkohle keine Emulsionströpfchen adsorbieren kann. Diese lagern sich allenfalls an der Außenstruktur der Aktivkohleteilchen ab.

Aus der US-A 4 650 581 ist ein Behälter bekannt, der ein Koaleszenzelement aufweist. Dieses Koaleszenzelement muß gelegentlich ausgetauscht werden. Dazu ist es erforderlich, den Behälter zu entleeren, anschließend das Koaleszenzelement zu entfernen, ein neues Koaleszenzelement anzuordnen und den Behälter wieder zu befüllen. Dieses Verfahren ist sehr aufwendig und erfordert einen hohen gerätetechnischen Aufwand.

Die DE-A-28 00 344 beschreibt ein Verfahren und eine Vorrichtung zum Trennen von Emulsionen durch Koaleszenz. In einem Behälter ist ein Koaleszierbett vorgesehen, das in einer Verlängerung mit einer Auskleidung eines hydrophoben Materials ausgestaltet ist. Während der Auslauf für das gereinigte Wasser im unteren Bereich des Behälters erfolgt und über ein Steigrohr geführt wird, ist der Auslauf für das abgeschiedene Öl im oberen Bereich des Behälters angeordnet. Ein Nachteil dieser Einrichtung besteht darin, daß der Austausch des Koaleszierbettes einen sehr hohen Aufwand erfordert und eine vollständige Entleerung des Behälters nötig ist. Außerdem trägt bei diesem System zugeführt Luft zu einer Verwirbelung der Schichten bei, welche zu einer nachträglichen Vermischung der getrennten Medien führen kann.

Der Erfindung liegt daher die Aufgabe zugrunde, einen Koaleszenz-Abscheider zu schaffen, der wartungsfrei ist bzw. einen einfachen Austausch des Koaleszenz-Elements ermöglicht, wobei durch eine verwirbelungsfreie Funktionsweise ein sehr hoher Wirkungsgrad und damit ein sehr hoher Abscheidegrad erzielt wird.

Diese Aufgabe wird ausgehend von dem Oberbegriff des Hauptanspruchs durch dessen kennzeichnende Merkmale gelöst.

Ein wesentlicher Vorteil der Erfindung besteht darin, daß in jeder Betriebsweise gewährleistet ist, daß kein Öl in den Ablauf für das Wasser gelangen kann. Dies wird dadurch erreicht, daß zum einen der Auslauf für das Wasser im unteren Bereich des Flüssigkeitsbehälters angeordnet ist und mit einem Steigrohr versehen ist, zum anderen mit der Anordnung des Auslaufs für das Öl, der sich oberhalb der Oberkante des Steigrohres befindet. Da das Öl leichter ist als Wasser, wird gewährleistet, daß in den Ölauslauf kein Wasser gelangen kann.

Selbst unter der Annahme, daß sich kein Öl in dem Flüssigkeitsbehälter befindet, wird aufgrund des Prinzips der kommunizierenden Röhren bei ansteigendem Wasserpegel dieser nur bis zur maximalen Höhe - entsprechend der Höhe des Steigrohres - ansteigen.

Ein weiterer Vorteil der Erfindung ist darin zu sehen, daß der Abscheider wartungsfrei arbeitet. Es ist kein Austausch von irgendwelchen Filterelementen (Aktivkohlefilter o.ä.) erforderlich. Das Koaleszenz-Element, welches aus einer Feinfaser, z. B. aus einer Mikroglasfaserwicklung besteht, bedarf keiner Reinigung, sofern nicht zu dem Wasser bzw. zu der Emulsion noch andere auszufilternde Bestandteile in den Koaleszenz-Abscheider gelangen.

Sofern mit der Emulsion auch Luft mitgeführt wird, dies kann bei der Anwendung in Kompressoren der Fall sein, findet keine Beeinträchtigung der Funktion des Koaleszenzabscheiders statt, da der aufsteigende Flüssigkeitsstrom und die evtl. vorhandenen Luftblasen gezielt im zentrumsnahen Bereich der Flüssigkeit nach oben geführt werden.

Die Anordnung des Zulaufs für die Emulsion im unteren Bereich des Behälters und die Anordnung des Ablaufs für das Öl im oberen Bereich des Behälters ist eine weitere vorteilhafte Gestaltung, die eine Verwirbelung der Flüssigkeiten ebenfalls vermeidet.

Vorteilhaft bei der Erfindung ist auch die Vermeidung irgendwelcher elektrischer Sensoren, die üblicherweise für den Ablauf des aufgeschwommenen Öls bzw. den Ablauf des übrigen Flüssigkeitsgemischs vorgesehen werden. Gerade die Anwendung solcher Sensoren ist an einem Koaleszenz-Abscheider kritisch, da diese sehr leicht verschmutzt werden und damit in ihrer Funktionsfähigkeit beeinträchtigt sind.

Gemäß einer Weiterbildung der Erfindung ist das Koaleszenz-Element an seinem oberen Ende, an welchem die an dem Koaleszenz-Element gebildeten Öltröpfchen aufsteigen, mit einem Leitkörper versehen. Dieser Leitkörper sorgt dafür, daß die Öltröpfchen nicht im unteren Bereich des Flüssigkeitsbehälters verwirbeln können und evtl. mit dem angesammelten Wasser über das Steigrohr ausgeführt werden. Durch den Leitkörper werden die Öltröpfchen in die Trennzone geführt und können an die Oberfläche der Flüssigkeit aufsteigen.

Eine weitere vorteilhafte Ausgestaltung der Erfindung sieht vor, eine Grenzschichtmeßsonde zur Ermittlung des maximalen Ölinhaltes in dem Flüssigkeitsfilter anzuordnen. Mit dieser Sonde ist es möglich, eine Überwachung der in dem Behälter maximal zulässigen Ölmenge vorzunehmen, wobei der Meßsonde nachgeordnet eine Auswerteeinheit angeordnet ist, die ein Signal erzeugt, sobald die maximale Ölmenge überschritten ist.

Eine weitere vorteilhafte Ausgestaltung der Erfindung zeichnet sich dadurch aus, daß ein Steigzylinder in dem Flüssigkeitsbehälter angeordnet ist. Dieser Steigzylinder schließt sich an den Leitkörper an und besteht beispielsweise aus einem Drahtgewebe. Der Steigzylinder hat die Aufgabe, Luftblasen, die noch mit dem Kondensat mitgeführt werden, verwirbelungsfrei nach oben abzuführen.

Die Erfindung wird nachfolgend anhand eines Ausführungsbeispiels näher erläutert. Es zeigt:
Figur 1 ein Gesamtsystem zur Erzeugung ölfreier Druckluft,
Figur 2 eine Einrichtung zur Kondensattrennung.

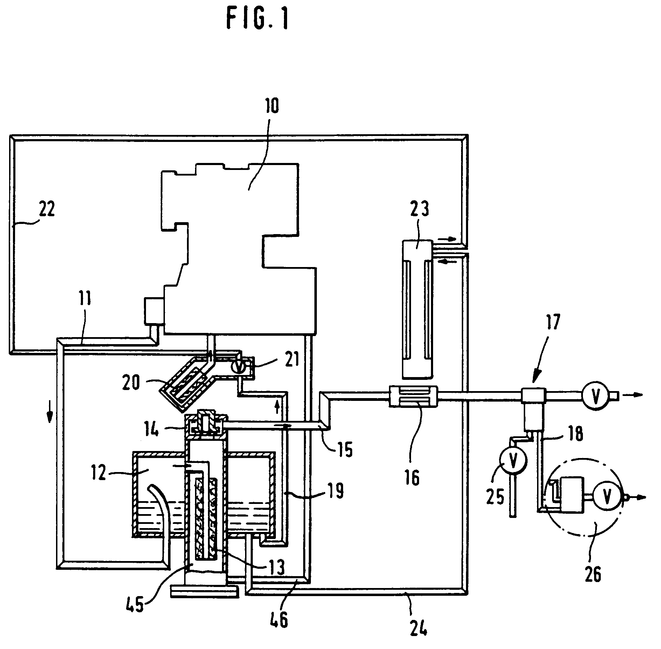

Das Gesamtsystem gemäß Figur 1 zeigt einen Kompressor 10, der hier nur schematisch angedeutet ist und beispielsweise ein Schraubenverdichterelement zur Drucklufterzeugung aufweist. Die von dem Kompressor 10 erzeugte Druckluft gelangt über die Leitung 11 zu einem Behälter 12, der ein Luftentölelement 13 enthält. Dieses Luftentölelement 13 ist in Form eines Filters aufgebaut. Die Luft durchströmt von der Innenseite zur Außenseite das Element. Die sich in der Luft befindlichen Öltröpfchen bzw. der Ölnebel lagern sich in dem Element ab und sammeln sich auf dem Boden des Teilbehälters 45 und wird über die Rückführleitung 46 dem Kompressor 10 zugeführt.

Über ein Mindestdruckventil 14 gelangt die verdichtete Luft zur Leitung 15, welche zu einem Luftkühler 16 führt. Dem Luftkühler ist ein Kondensatabscheider 17 nachgeschaltet. Das in dem Kondensatabscheider abgeschiedene Kondensat, welches aus Öl und Wasser bzw. Emulsion besteht, gelangt über die Leitung 18 zu einer Einrichtung 26 zur Kondensattrennung, welche weiter unten beschrieben wird.

Das in dem Behälter 12 angesammelte Öl wird über die Leitung 19 einem Ölfilter 20 zugeführt. Von diesem Ölfilter 20 aus gelangt das Öl wieder in den Schmierkreislauf des Kompressors 10.

Am Ölfilter 20 ist ferner ein Umschaltventil 21 angeordnet. Dieses Umschaltventil verschließt bzw. öffnet eine Leitung 22, die zu einem Ölkühler 23 führt. Der Eingang des Ölkühlers 23 ist mit dem Behälter 12 über die Leitung 24 verbunden. Sofern die Temperatur des Öls im Behälter 12 über eine bestimmte Maximaltemperatur hinaus ansteigt, wird das Ventil 21 von seiner momentanen Position in eine Position geschaltet, welche die Leitung 19 verschließt, so daß das in dem Behälter 12 angesammelte Öl über die Leitung 24 und den Ölkühler 23 zu dem Ölfilter 20 geführt wird und damit eine wirksame Kühlung des Öls erzielt werden kann.

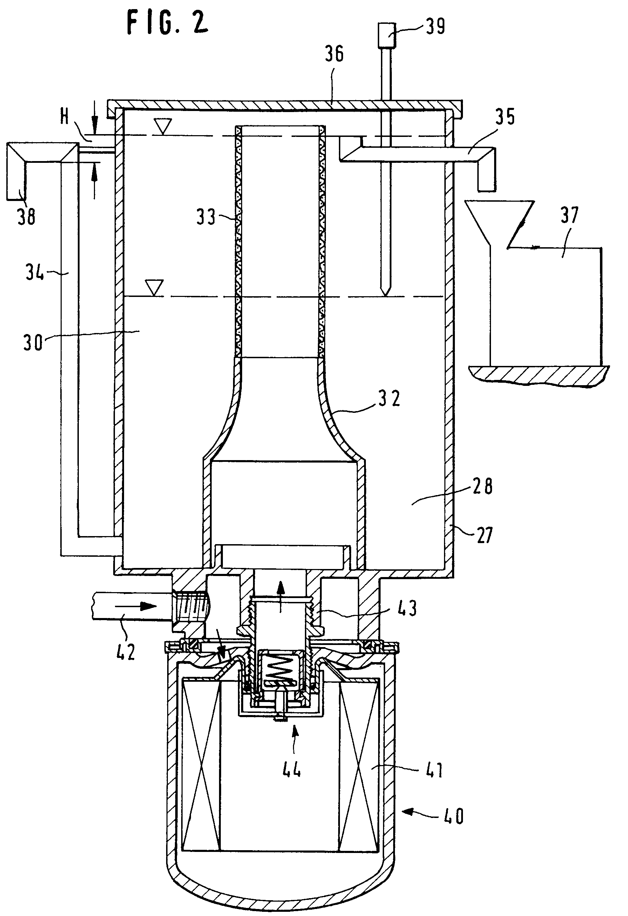

Der Kondensatabscheider 17 ist mit einem Auslaufventil 25 versehen. Dieses kann bei Stillstand des gesamten Systems geöffnet werden und dient als zusätzlicher Kondensatauslauf. Normalerweise wird das in dem Kondensatabscheider 17 abgeschiedene Kondensat über die Leitung 18 einer Einrichtung zur Kondensattrennung 26 zugeführt. Diese Einrichtung 26 wird anhand der Figur 2 näher erläutert.

Die Einrichtung zur Kondensattrennung gemäß Figur 2 weist ein Filterelement auf. Dieses Element ist in Form eines Wechselfilters 40 aufgebaut. In diesem Wechselfilter 40 befindet sich das Mikroglasfaserelement 41, welches geeignet ist, die über Leitung 42 zugeführte Emulsion zu trennen, d. h. das darin enthaltene Öl in größere Öltropfen zu vereinigen, die dann durch die Strömung der Flüssigkeit aus dem Mikroglasfaserelement 41 in den Flüssigkeitsbehälter 27 eingeleitet werden.

Das Wechselfilter 40 ist an einem Gewindeflansch 43 befestigt und kann von Hand oder mittels eines Werkzeugs montiert bzw. demontiert werden. Damit beim Entfernen des Wechselfilters 40 keine Flüssigkeit aus dem Flüssigkeitsbehälter 27 austreten kann, ist ein Ventil 44 vorgesehen. Dieses Ventil wird entweder automatisch beim Lösen des Wechselfilters 40 geschlossen oder ist manuell vor dem Lösen des Wechselfilters zu schließen. Die automatische Betätigung des Ventils erfolgt beispielsweise dadurch, daß aufgrund der Schraubbewegungen des Wechselfilters ein mechanisches Element in Gang gesetzt wird, welches das Ventil betätigt.

Der Eintritt der Flüssigkeit von dem Wechselfilter 40 in den Behälter 27, d. h. in die obere Kammer, erfolgt über einen Leitkörper 32. Dieser Leitkörper 32 ist oben offen und vermeidet Verwirbelungen in der oberen Kammer 30. Oberhalb des Leitkörpers 32 ist ein Steigzylinder 33 angeordnet. Dieser besteht aus einem Drahtgewebe oder Maschensieb.

Im unteren Bereich des oberen Zylinders 30 befindet sich der Wasserüberlauf in Form eines gebogenen Rohres. Im oberen Bereich des Behälters befindet sich ein Ölauslauf 35. Die Oberkante des Ölauslaufs weist zu der Unterkante des Wasserüberlaufs 34 eine Höhendifferenz H auf. Diese ist abhängig von der Ölspeicherkapazität des Behälters und beträgt beispielsweise 10 mm.

Der Flüssigkeitsbehälter ist mit einem Deckel 36 versehen. Der Ölauslauf 35 führt zu einem Ölbehälter 37, welcher von Zeit zu Zeit entleert werden kann. Es besteht natürlich auch die Möglichkeit, den Ölauslauf 35 direkt an den Ölkreislauf des Gesamtsystems anzuschließen. Der Wasserüberlauf 34 ist beispielsweise an eine hier nicht dargestellte Abwasserleitung angeschlossen, wobei eine Heberwirkung durch eine geeignete Entlüftung oder Unterbrechung der Rohrleitung zu vermeiden ist. Der Durchmesser des Flüssigkeitsbehälters richtet sich nach der anfallenden Menge Kondensat pro Zeiteinheit. Es ist selbstverständlich, daß der Durchmesser so gewählt wird, daß die Strömungsgeschwindigkeit des Wassers von oben nach unten, also in Richtung des Wasserauslaufs, geringer ist als die Betriebsgeschwindigkeit der Öltropfen.

### Bezugszeichenliste

- 10: Kompressor
- 11: Leitung
- 12: Behälter
- 13: Luftentölelement
- 14: Mindestdruckventil
- 15: Leitung
- 16: Luftkühler
- 17: Kondensatabscheider
- 18: Leitung
- 19: Leitung
- 20: Ölfilter
- 21: Umschaltventil
- 22: Leitung
- 23: Ölkühler
- 24: Leitung
- 25: Ventil
- 26: Kondensattrennung
- 27: Flüssigkeitsbehälter
- 28: Kammer
- 30: Kammer
- 32: Leitkörper
- 33: Steigzylinder
- 34: Wasserüberlauf
- 35: Ölauslauf
- 36: Deckel
- 37: Ölbehälter
- 38: Auslaufbogen
- 39: Grenzschichtmeßsonde
- 40: Wechselfilter
- 41: Fiberglaselement
- 42: Emulsion
- 43: Gewindeflansch
- 44: Ventil
- 45: Teilbehälter
- 46: Rückführleitung

## Patentansprüche

1. Koaleszenz-Abscheider mit einem einen Einlauf und einen Ablauf aufweisenden Flüssigkeitsbehälter (27), einem Koaleszenzelement, welches von der zugeführten Flüssigkeit durchströmt wird, einem im oberen Bereich des Behälters angeordneten Auslauf (35) für das im Behälter angesammelte Öl und einem im unteren Behälterbereich angeordneten Auslauf für das im Behälter sich ansammelnde Wasser, wobei der Auslauf für das Wasser mit einem Steigrohr (34) versehen ist und der Auslauf für das Öl sich oberhalb des Endes des Steigrohrs (34) befindet, wobei das Koaleszenz-Element in Form eines Wechselelements (40) an dem Behälter angeordnet ist und im Behälter und oberhalb des Wechselelements (40) ein Leitkörper (32) vorgesehen ist, an den sich ein Steigzylinder (33) anschließt, wobei sich der Steigzylinder (33) bis zum Bereich des Flüssigkeitsspiegels erstreckt, und wobei zwischen dem Wechselelement (40) und dem Flüssigkeitsbehälter (27) ein Ventil (44) angeordnet ist, welches automatisch oder manuell den Behälter (27) bei Entfernen des Wechselelements (40) verschließt.

2. Koaleszenz-Abscheider nach Anspruch 1, dadurch gekennzeichnet, daß das Koaleszenz-Element näherungsweise zylinderförmig ist und von außen nach innen durchströmt ist, wobei der Boden des Koaleszenz-Elements verschlossen und die obere Stirnseite offen ist.

3. Koaleszenz-Abscheider nach einem der vorherigen Ansprüche, dadurch gekennzeichnet, daß der Auslauf (35) für das Öl in Abhängigkeit von der Ölspeicherkapazität des Behälters näherungsweise 10 mm oberhalb des Steigrohres (34) endet.

4. Koaleszenz-Abscheider nach einem der vorherigen Ansprüche, dadurch gekennzeichnet, daß eine Grenzschichtenmeßsonde (39) zur Ermittlung des maximalen Ölinhalts in dem Flüssigkeitsbehälter (27) angeordnet ist.

5. Koaleszenz-Abscheider nach einem der vorherigen Ansprüche, dadurch gekennzeichnet, daß das Koaleszenz-Element aus einem Feinstfasermaterial (41) besteht.

6. Koaleszenz-Abscheider nach Anspruch 1, dadurch gekennzeichnet, daß der Steigzylinder (33) aus einem Drahtgewebe besteht und oberhalb der maximalen Füllhöhe des Flüssigkeitsbehälters (27) endet.

7. Koaleszenz-Abscheider nach einem der vorherigen Ansprüche, dadurch gekennzeichnet, daß das Wechselelement (40) mit einem Anschlußkopf an dem Gehäuse angeordnet ist und wobei der Anschlußkopf mit dem Kondensateinlauf versehen ist.

## Claims

1. Coalescence separator, including a liquid container (27) provided with an inlet and an outlet, a coalescence element which is traversed by the supplied liquid, an outlet (35) disposed in the upper region of the container for the oil which has collected in the container, and an outlet disposed in the lower container region for the water collecting in the container, the outlet for the water being provided with a riser pipe (34), and the outlet for the oil being situated above the end of the riser pipe (34), wherein the coalescence element is disposed on the container in the form of an interchangeable element (40), and a guide member (32) is provided in the container and above the interchangeable element (40), a riser cylinder (33) communicating with said guide member, wherein the riser cylinder (33) extends to the region of the liquid surface, and wherein a valve (44) is disposed between the interchangeable element (40) and the liquid container (27), which valve automatically closes or is manually operable to close the container (27) when the interchangeable element (40) is removed.

2. Coalescence separator according to claim 1, characterised in that the coalescence element is approximately cylindrical and traversable inwardly from the outside, the base of the coalescence element being closed and the upper end face being open.

3. Coalescence separator according to one of the preceding claims, characterised in that the outlet (35) for the oil terminates approximately 10 mm above the riser pipe (34) in dependence on the oil storage capacity of the container.

4. Coalescence separator according to one of the preceding claims, characterised in that a boundary layer measuring probe (39) is disposed in the liquid container (27) for determining the maximum oil content.

5. Coalescence separator according to one of the preceding claims, characterised in that the coalescence element is formed from a very fine fibrous material (41).

6. Coalescence separator according to claim 1, characterised in that the riser cylinder (33) is formed from a wire mesh and terminates above the maximum filling level of the liquid container (27).

7. Coalescence separator according to one of the preceding claims, characterised in that the interchangeable element (40) is disposed on the housing by means of a connection head, the connection head being provided with the condensate inlet.

## Revendications

1. Séparateur à coalescence comprenant un réservoir à liquide (7) avec une entrée et une sortie, un élément à coalescence traversé par le liquide fourni, une sortie (35) prévue dans la zone supérieure du réservoir pour l'huile accumulée dans le réservoir et une sortie prévue dans la zone inférieure du réservoir pour l'eau accumulée dans le réservoir,
la sortie de l'eau étant munie d'un tube montant (34) et la sortie de l'huile se trouvant au-dessus de l'extrémité du tube montant (34),
l'élément à coalescence se présentant sous la forme d'un élément interchangeable (40) monté sur le réservoir et un guide (32) est prévu dans le réservoir, au-dessus de l'élément interchangeable (40), guide qui se poursuit par un cylindre montant (33), ce cylindre (33) arrivant jusque dans la zone du niveau de liquide et entre l'élément interchangeable (40) et le réservoir à liquide (27) se trouve une soupape (44) fermant automatiquement ou manuellement le réservoir (27) lorsqu'on enlève l'élément interchangeable (40).

2. Séparateur à coalescence selon la revendication 1,
caractérisé en ce que
l'élément à coalescence est sensiblement cylindrique et est traversé de l'extérieur vers l'intérieur, le fond de l'élément à coalescence est fermé et sa face frontale supérieure est ouverte.

3. Séparateur à coalescence selon l'une des revendications précédentes,
caractérisé en ce que
la sortie (35) de l'huile se termine sensiblement à 10 mm au-dessus du tube montant (34) en fonction de la capacité de stockage d'huile du réservoir.

4. Séparateur à coalescence selon l'une des revendications précédentes,
caractérisé par
une sonde à couche limite (39) pour déterminer la teneur d'huile maximale du réservoir à liquide (27).

5. Séparateur à coalescence selon l'une des revendications précédentes,
caractérisé en ce que
l'élément à coalescence est en une matière à fibres très fines (4).

6. Séparateur à coalescence selon la revendication 1,
caractérisé en ce que
le cylindre montant (33) est un tissu de fils de fer et se termine au-dessus de la hauteur de remplissage maximale du réservoir à liquide (27).

7. Séparateur à coalescence selon l'une des revendications précédentes,
caractérisé en ce que
l'élément interchangeable (40) est monté sur le boîtier avec une tête de raccordement et cette tête est munie d'une entrée de condensat.
